# EUROPÄISCHE PATENTANMELDUNG

(11) **EP 2 369 125 A2**
(43) Veröffentlichungstag der Anmeldung: **28.09.2011**
(21) Anmeldenummer: 11001928.8
(22) Anmeldetag: 09.03.2011
(51) Int. Cl.: E06B 9/72, F16H 1/46

(54) **Antriebsvorrichtung**

(30) Priorität: 10.03.2010 DE 102010010953
(71) Anmelder: Gerhard Geiger GmbH & Co., 74303 Bietigheim-Bissingen (DE)
(72) Erfinder: Dangel, Hans-Michael, 74391 Erlingheim (DE)
(74) Vertreter: Jeck, Anton

(57) **Zusammenfassung**

Die Erfindung betrifft eine Antriebsvorrichtung für Rollläden, Jalousien, Markisen, Tore, Türen und dergleichen mit einem in einem Wickelrohr angeordneten, dieses Wickelrohr antreibenden Elektromotor, dessen Drehzahl mittels eines mindestens einstufigen Planetengetriebes (1) vermindert wird, wobei jede Stufe (2,3,4) des Planetengetriebes in dessen Ursprungsform durch einen Planetenrad-Trägerkörper (2₁,3₁,4₁) und mindestens einen zugehörigen Kronenkörper (2₂,3₂,4₂) gebildet ist, jeder Trägerkörper am Umfang verteilte und in der Nähe des Umfangs drehbar gelagerte Planetenräder (5,6,7) und ein zentrales, jeweils mit den Planetenrädern der nächsten Stufe kämmendes Abgangszahnrad (9) bzw. einen Abgangsabschnitt (8,9) aufweist und jeder Kronenkörper mit einer Innenverzahnung versehen ist, die mit den zugehörigen Planetenrädern kämmen. Der Trägerkörper mindestens einer Getriebestufe ist durch einen Kupplungskörper (25) ersetzbar, der in seinen Abmessungen dem ersetzten Trägerkörper angepasst ist und weist eine zentrale, mit dem Abgangszahnrad (9) der vorhergehenden Stufe kämmende Innenverzahnung (26) bzw. einen mit einem Elektromotor kuppelbaren Kuppelabschnitt (11') sowie ein dem Abgangszahnrad (8') der ersetzten Stufe gleichendes Abgangszahnrad (8) bzw. einen dem Abgangsabschnitt der ersetzten Stufe gleichenden Abgangsabschnitt auf.

## Beschreibung

Die Erfindung betrifft eine Antriebsvorrichtung nach dem Oberbegriff des Anspruchs 1, die für den elektrischen Antrieb von Rollläden, Jalousien, Markisen, Toren, Türen und dergleichen eingesetzt wird.

Derartige Antriebsvorrichtungen sind allgemein bekannt. Üblicherweise werden diese als Rohr- oder Blockantrieb ausgebildet. Sie bestehen im Wesentlichen aus einem Elektromotor, einem Kuppelabschnitt, einem ein- oder mehrstufigen Planetengetriebe und einem Kuppelteil. Der Kuppelabschnitt verbindet zumindest die Motorwelle des Elektromotors mit dem Planetengetriebe. Beispielsweise kann der Kuppelabschnitt mit einer Außenverzahnung versehen sein, welche die Planetenräder der ersten Getriebestufe kämmt. Beispielsweise kann der Kuppelabschnitt als ein auf der Motorwelle angeordnetes Zahnritzel ausgeführt sein. Das Planetengetriebe dient der Verminderung der Motordrehzahl. Das Kuppelteil ist zur Verbindung zumindest eines Ausgangsorgans des Planetengetriebes mit einem Wickelrohr vorgesehen. Das Ausgangsorgan kann durch einen zentralen Abgangsabschnitt der letzten Getriebestufe des Planetengetriebes gebildet sein.

Ein für eine solche Antriebsvorrichtung geeignetes mehrstufiges Planetengetriebe ist durch DE 692 08 610 T2 bekannt. Die Getriebestufen des Planetengetriebes sind axial in Reihe geschaltet miteinander verbunden, so dass sich das Gesamtübersetzungsverhältnis des Planetengetriebes als Produkt der Übersetzungsverhältnisse der einzelnen Getriebestufen ergibt. Das Gesamtübersetzungsverhältnis des Planetengetriebes entspricht dabei dem Verhältnis der Motordrehzahl zur Abgangsdrehzahl des Planetengetriebes und damit der Antriebsvorrichtung. Jede Getriebestufe besteht aus einem Planetenrad-Trägerkörper mit einer Drehachse und einem koaxial zur Drehachse angeordneten und den Planetenrad-Trägerkörper in radialer Richtung umgebenden, zugehörigen Kronenkörper mit einer Innenverzahnung. Der Planetenrad-Trägerkörper ist dabei koaxial innenliegend um die Drehachse im Kronenkörper drehbar angeordnet. Jeder Planetenrad-Trägerkörper weist am Umfang verteilt angeordnete und in der Nähe des Umfangs drehbar gelagerte, die Innenverzahnung des Kronenkörpers kämmende Planetenräder sowie einen zentralen Abgangsabschnitt auf. Der zentrale Abgangsabschnitt verläuft koaxial zu dem Kronenkörper entlang der Drehachse des Planetenrad-Trägerkörpers. Der zentrale Abgangsabschnitt kann mit einer Außenverzahnung versehen sein, welche die Planetenräder der nächsten Getriebestufe von Innen kämmt. Der zentrale Abgangsabschnitt der letzten Getriebestufe bildet dabei das Ausgangsorgan des Planetengetriebes und kann mit einem Kuppelteil verbunden werden oder ein solches bilden oder umfassen oder von einem solchen umfasst werden. Ein Kuppelabschnitt ist mit einer Außenverzahnung versehen, welche die Planetenräder der ersten Getriebestufe von Innen kämmt. Zur Anpassung des Gesamtübersetzungsverhältnisses ist das Planetengetriebe modular aufgebaut. Der modulare Aufbau sieht vor, in Abhängigkeit von einem zu erzielenden Gesamtübersetzungsverhältnis eine entsprechende Anzahl Getriebestufen axial in Reihe geschaltet modular untereinander zu verbinden. Zur axial in Reihe geschalteten modularen Verbindung der Getriebestufen untereinander ist vorgesehen, dass jede Getriebestufe durch einen Kronenkörper verwirklicht ist, der einen Planetenrad-Trägerkörper beherbergt. Die Kronenkörper der Getriebestufen sind darüber hinaus abschnittsweise mit einer Außenverzahnung versehen, welche in die Innenverzahnung eines Kronenkörpers einer benachbarten Getriebestufe greift. Darüber hinaus ist der zentrale Abgangsabschnitt jedes Planetenrad-Trägerkörpers mit einer Außenverzahnung versehen, welche die Planetenräder der nächsten Getriebestufe von Innen kämmt.

Durch die Festlegung der Zähneanzahl der Getriebestufen und die Anzahl der Getriebestufen liegt auch die Abgangsdrehzahl der Antriebsvorrichtung fest, die aufgrund der gewählten Bauart nicht änderbar ist.

Durch Hinzufügung oder Weglassung einer oder mehrerer Planetengetriebestufen kann das Übersetzungsverhältnis und damit die Abgangsdrehzahl der Antriebsvorrichtung in Stufen, die dem Übersetzungsverhältnis einer Planetengetriebestufe entsprechen, festgelegt werden.

Nachteilig hieran sind die unterschiedlichen Abmessungen von Antriebsvorrichtungen mit verschiedenen Gesamtübersetzungsverhältnissen. Hierdurch ist für jede Antriebsvorrichtung mit einem eigenen Gesamtübersetzungsverhältnis eine eigene Montagesystematik erforderlich. Mit anderen Worten weist jede Antriebsvorrichtung je nach Gesamtübersetzungsverhältnis andere Abmessungen, beispielsweise andere Längenabmessungen auf. Die verschiedenen Abmessungen führen zu jeweils unterschiedlichem Bauraumbedarf, der wiederum jeweils eine gesonderte, als Montagesystematik bezeichnete Lösung bei Unterbringung und drehmomentschlüssiger Anordnung der Antriebsvorrichtung beispielsweise in einem Wickelrohr nach sich zieht. Eine Aufgabe der Erfindung besteht darin, eine Antriebsvorrichtung gemäß dem Oberbegriff des Anspruchs 1 zu schaffen, deren Ausgangsdrehzahl unter Beibehaltung der bisherigen Montagesystematik variabel gestaltet werden kann.

Diese Aufgabe wird mit den Merkmalen des Anspruchs 1 gelöst.

Demnach ist eine Antriebsvorrichtung für Rollläden, Jalousien, Markisen, Tore, Türen und dergleichen mit einem in einem Wickelrohr angeordneten, dieses Wickelrohr antreibenden Elektromotor vorgesehen, dessen Drehzahl mittels eines mindestens einstufigen Planetengetriebes vermindert wird.

Die Antriebsvorrichtung kann einen zur Verbindung zumindest der Motorwelle des Elektromotors mit dem Planetengetriebe vorgesehenen Kuppelabschnitt aufweisen. Der Kuppelabschnitt kann beispielsweise mit einer Planetenräder eines Planetenrad-Trägerkörpers einer ersten Getriebestufe kämmenden Außenverzahnung versehen sein. Der Kuppelabschnitt kann beispielsweise als ein auf der Motorwelle angeordnetes Zahnritzel ausgeführt sein.

Die Antriebsvorrichtung kann ein Kuppelteil umfassen. Das Kuppelteil kann zur Verbindung zumindest eines beispielsweise durch einen zentralen Abgangsabschnitt des Planetenrad-Trägerkörpers einer letzten Getriebestufe des Planetengetriebes gebildeten Ausgangsorgans des Planetengetriebes mit dem Wickelrohr vorgesehen sein.

Das Planetengetriebe weist mindestens einen Kronenkörper mit einer Innenverzahnung auf. Jede kurz auch als Stufe bezeichnet Getriebestufe des Planetengetriebes umfasst einen Planetenrad-Trägerkörper mit am Umfang verteilten und in der Nähe des Umfangs drehbar gelagerten, die Innenverzahnung kämmenden Planetenrädem und einem zentralen Abgangsabschnitt. Der Planetenrad-Trägerkörper weist eine sich in einer axialen Richtung der Antriebsvorrichtung und des Planetengetriebes erstreckenden Drehachse auf. Der zentrale Abgangsabschnitt ist vorzugsweise mit einer die Planetenräder der nächsten Stufe kämmenden Außenverzahnung versehen. Der zentrale Abgangsabschnitt ist beispielsweise als Abgangszahnrad oder Abgangsabschnitt ausgeführt.

Der mindestens eine Kronenkörper ist zur Beherbergung von insgesamt mindestens zwei Planetenrad-Trägerkörpern vorgesehen.

Der Trägerkörper mindestens einer Getriebestufe ist durch einen Kupplungskörper ersetzbar.

Mit anderen Worten ist in mindestens einem Kronenkörper des Planetengetriebes der Antriebsvorrichtung zumindest ein Kupplungskörper anstelle wenigstens eines Planetenrad-Trägerkörpers frei eines Eingriffs mit der Innenverzahnung drehbar zum Ersatz einer Getriebestufe unterbringbar bzw. untergebracht. Der zumindest eine Kupplungskörper überbrückt wenigstens den mindestens einen Planetenrad-Trägerkörper zumindest in dessen Abmessung in axialer Richtung, anstelle welchen mindestens einen Planetenrad-Trägerkörpers der zumindest eine Kupplungskörper vorgesehen ist.

Vorzugsweise umfasst das Planetengetriebe der Antriebsvorrichtung mindestens einen Kronenkörper, der zur Beherbergung von mindestens zwei Planetenrad-Trägerkörpern vorgesehen ist.

Alternativ oder zusätzlich kann vorgesehen sein, dass das Planetengetriebe der Antriebsvorrichtung mindestens einen Kronenkörper umfasst, der zur Beherbergung eines Planetenrad-Trägerkörpers vorgesehen ist.

Beispielsweise kann das Planetengetriebe der Antriebsvorrichtung mehrere bevorzugt unverdrehbar miteinander verbundene Kronenkörper umfassen, von denen einer oder mehrere zur Beherbergung je eines Planetenrad-Trägerkörpers vorgesehen sind. Grundsätzlich ist hierbei denkbar, dass das Planentengetriebe ausschließlich Kronenkörper umfasst, die zur Beherbergung jeweils eines Planetenrad-Trägerkörpers vorgesehen sind.

Der mindestens eine Kupplungskörper kann in seinen Abmessungen dem ersetzbaren bzw. ersetzten Trägerkörper angepasst sein.

Zumindest ein zentraler Abgangsabschnitt eines Planetenrad-Trägerkörpers einer Getriebestufe kann als Abgangszahnrad mit Planetenräder der nächsten Stufe kämmender Außenverzahnung ausgeführt sein.

Der mindestens eine Kupplungskörper kann:
- eine zentrale, mit dem Abgangszahnrad der vorhergehenden Stufe kämmende Innenverzahnung und/oder
- einen mit einem Elektromotor kuppelbaren Kuppelabschnitt und/oder
- ein dem Abgangszahnrad der ersetzten Stufe gleichendes Abgangszahnrad und/oder
- einen dem Abgangsabschnitt der ersetzten Stufe gleichenden Abgangsabschnitt aufweisen.

Hierdurch wird unter Anderem eine Antriebsvorrichtung für Rollläden, Jalousien, Markisen, Tore, Türen und dergleichen erhalten, mit einem in einem Wickelrohr angeordneten, dieses Wickelrohr antreibenden Elektromotor, dessen Drehzahl mittels eines mindestens einstufigen, beispielsweise zwei- oder mehrstufigen Planetengetriebes vermindert wird, wobei jede Stufe des Planetengetriebes in dessen Ursprungsform durch einen Planetenrad-Trägerkörper und beispielsweise einen zugehörigen Kronenkörper gebildet ist, jeder Trägerkörper am Umfang verteilte und in der Nähe des Umfangs drehbar gelagerte Planetenräder und einen zentralen Abgangsabschnitt, beispielsweise ein jeweils mit den Planetenrädern der nächsten Stufe kämmendes Abgangszahnrad bzw. einen Abgangsabschnitt aufweist, und jeder Kronenkörper mit einer Innenverzahnung versehen ist, die mit den zugehörigen Planetenrädern kämmen.

Der Trägerkörper mindestens einer Getriebestufe ist durch einen Kupplungskörper ersetzbar, der in seinen Abmessungen dem ersetzten Trägerkörper angepasst ist und eine zentrale, mit dem Abgangszahnrad der vorhergehenden Stufe kämmende Innenverzahnung bzw. einen mit einem Elektromotor kuppelbaren Kuppelabschnitt sowie ein dem Abgangszahnrad der ersetzten Stufe gleichendes Abgangszahnrad bzw. einen dem Abgangsabschnitt der ersetzten Stufe gleichenden Abgangsabschnitt aufweist.

Dabei kann der beispielsweise als Zahnkupplung ausgeführte Kupplungskörper derart ausgestaltet werden, dass die Abmessungen des grundsätzlich für den Zweck geplanten Planetengetriebes erhalten bleiben.

Gemäß einer weiteren Ausbildung der Erfindung gleicht der Kupplungskörper dem ersetzten Trägerkörper bis auf eine Innenverzahnung.

Ausführungsbeispiele der folgend näher erläutert. Darin sind gleiche Bezugszeichen für gleiche oder gleich wirkende Elemente verwendet. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Ferner werden der Übersicht halber nur Bezugszeichen in den einzelnen Figuren dargestellt, die für die Beschreibung der jeweiligen Figur erforderlich sind. Es zeigen in schematischer Darstellung:
- Fig. 1: eine Explosionsdarstellung eines dreistufigen Planetengetriebes, wie es ursprünglich für den vorgesehenen Zweck geplant ist,
- Fig. 2: eine Explosionsdarstellung eines Planetengetriebes ähnlich der Fig. 1 mit einem Schnitt der dritten Stufe, die gemäß der Erfindung durch einen beispielsweise als Zahnkupplung ausgeführten Kupplungskörper gebildet ist,
- Fig. 3: eine Explosionsdarstellung eines Planetengetriebes ähnlich der Fig. 1 mit einem Schnitt der zweiten Stufe, die gemäß der Erfindung durch einen beispielsweise als Zahnkupplung ausgeführten Kupplungskörper gebildet ist, und
- Fig. 4: eine Explosionsdarstellung eines Planetengetriebes ähnlich der Fig. 1 mit einer ersten Stufe, die gemäß der Erfindung durch einen Kupplungskörper gebildet ist.

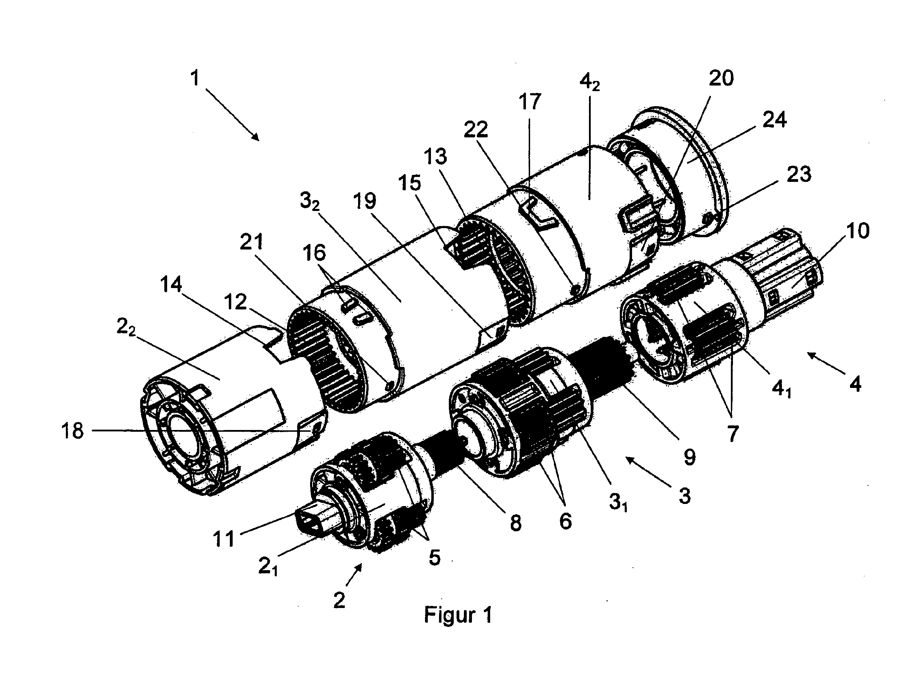

In Fig. 1 ist ein dreistufiges Planetengetriebe 1 dargestellt, das als Untersetzungsgetriebe ausgebildet ist. Jede vereinfacht auch kurz als Stufe bezeichnete Getriebestufe 2, 3, 4 ist durch einen zylinderförmigen Planetenrad-Trägerkörper 2₁, 3₁, 4₁ und einen zugehörigen, hülsenförmigen Kronenkörper 2₂, 3₂, 4₂ gebildet. Jede Getriebestufe 2, 3, 4 ist mit einem bestimmten Übersetzungsverhältnis ausgestattet.

Die vereinfacht kurz auch als Trägerkörper bezeichneten Planetenrad-Trägerkörper 2₁, 3₁, 4₁ weisen jeweils auf dem Umfang verteilte, in der Nähe des Umfangs drehbar gelagerte und außen verzahnte Planetenräder, wie die Planetenräder 5, 6, 7, und einen zentralen Abgangsabschnitt, wie die Abschnitte 8, 9, 10, auf. Der erste Trägerkörper 2₁ trägt drei Planetenräder 5, während der zweite und dritte Trägerkörper 3₁, 4₁ jeweils vier Planetenräder 6 bzw. 7 tragen. Die Abgangsabschnitte 8 und 9 sind als Zahnräder ausgebildet, wobei nach der Montage des Planetengetriebes der Abgangsabschnitt 8 mit den Planetenrädern 6 und der Abgangsabschnitt 9 mit den Planetenrädern 7 kämmt. Der Abgangsabschnitt 10 ist als Kuppelteil ausgebildet, der mit einem nicht dargestellten Wickelrohr kuppelbar ist. Der erste Trägerkörper 2₁ ist mit einem zentralen Kuppelabschnitt 11 versehen, der mit einem nicht dargestellten Elektromotor verbindbar ist.

Die Kronenkörper 2₂, 3₂, 4₂ weisen jeweils Innenverzahnungen, wie die Innenverzahnungen 12, 13 und am Umfang angeordnete Führungsmittel und Rastmittel auf.

Die Innenverzahnungen 12, 13 kämmen nach der Montage des Planetengetriebes mit den zugeordneten Planetenrädern 6 bzw. 7. Entsprechendes gilt für die erste Stufe 2.

Die Führungsmittel sind durch konische Ausschnitte 14, 15 der Kronenkörper 2₂, 3₂ und durch am Umfang der Kronenkörper 3₂, 4₂ angeordnete Rippen 16, 17 gebildet, während die Rastmittel durch am Umfang der Kronenkörper angeordnete Federlappen, wie die Federlappen 18-20 und am Umfang der Kronenkörper 3₂, 4₂ sowie eines Abschlussteils 24 angeordnete Nocken, wie die Nocken 21-23, gebildet sind. Die zusammengesetzten Kronenkörper 2₂, 3₂, 4₂ und das Abschlussteil 24 werden durch ein festgelegtes, nicht dargestelltes Rohr gehalten.

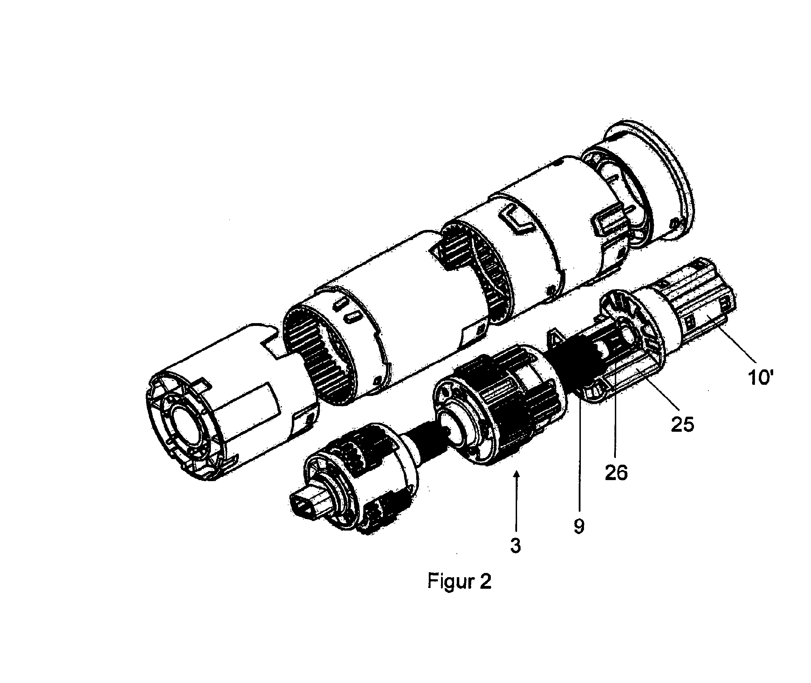

Durch diesen, in Fig.1 aufgezeigten Aufbau wird die Möglichkeit eröffnet, das Übersetzungsverhältnis des Planetengetriebes ohne großen Aufwand zu ändern, insbesondere ohne dabei die Abmessungen der Antriebsvorrichtung, vor allem deren Länge, zu verändern. Eine Art der Änderung des Übersetzungsverhältnisses gemäß der Erfindung ist in Fig. 2 dargestellt.

In Fig. 2 ist anstelle des Trägerkörpers 4₁ der Fig. 1 ein Kupplungskörper 25 vorgesehen, der mit einer zentralen Innenverzahnung 26 und mit einem Abgangskörper 10' versehen ist. Die Innenverzahnung 26 ist derart ausgebildet, dass sie mit dem Abgangszahnrad 9 der vorhergehenden Stufe 3 kämmt. Der Abgangskörper 10' entspricht dem Abgangskörper 10 der ersetzten Stufe 4.

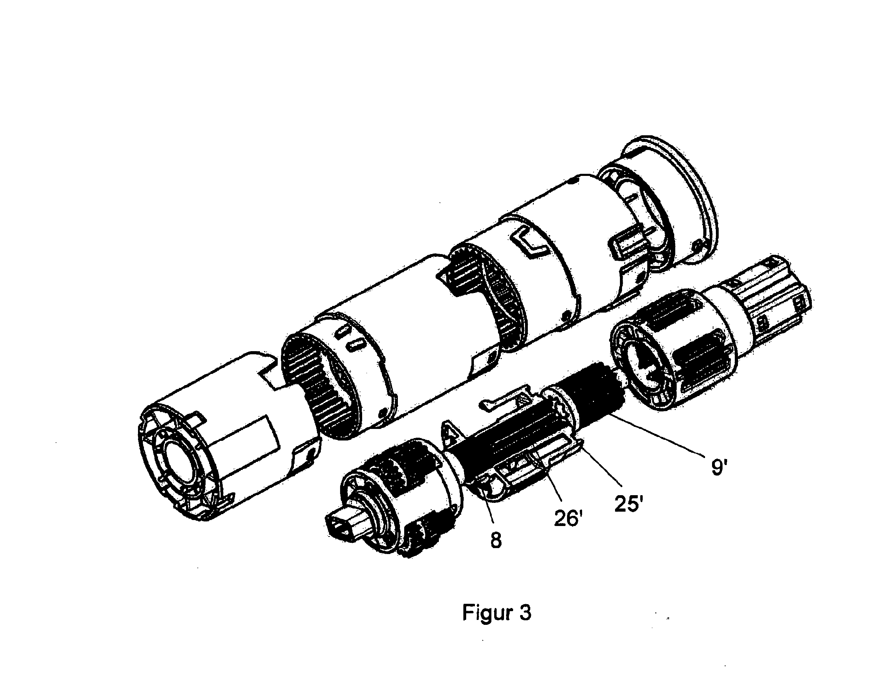

In Fig. 3 ist anstelle des Trägerkörpers 3₁ der Fig. 1 ein Kupplungskörper 25' vorgesehen, der mit einer zentralen Innenverzahnung 26' und mit einem Abgangszahnrad 9' versehen ist. Die Innenverzahnung 26' ist derart ausgebildet, dass sie mit dem Abgangszahnrad 8 der vorhergehenden Stufe 2 kämmt. Das Abgangszahnrad 9'entspricht dem Abgangszahnrad 9 der ersetzten Stufe 3.

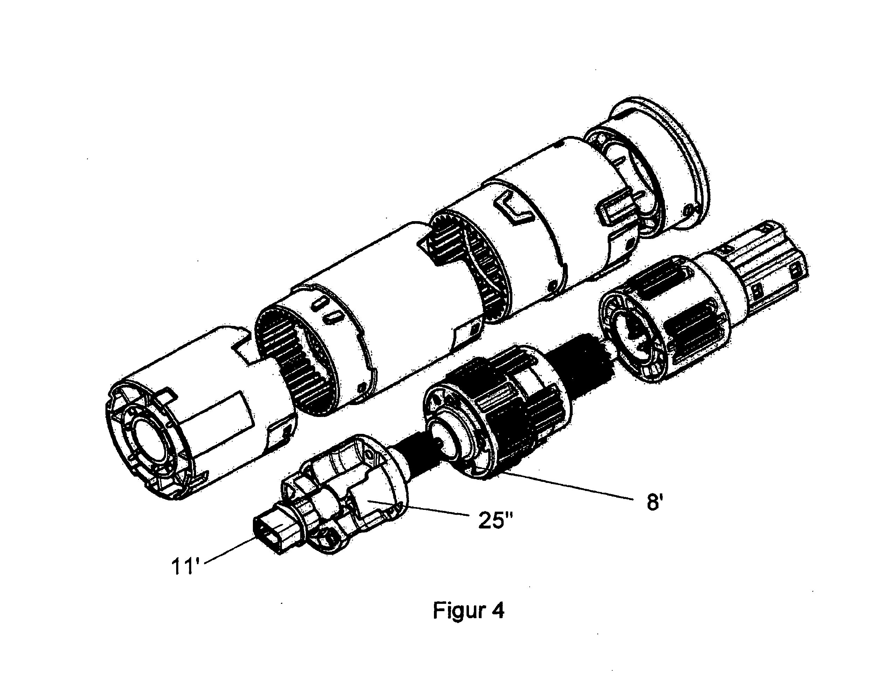

In Fig. 4 ist anstelle des Trägerkörpers 2₁ der Fig. 1 ein Kupplungskörper 25" vorgesehen, der mit einem Elektromotor kuppelbaren, zentralen Kuppelabschnitt 11' und mit einem Abgangszahnrad 8' versehen ist. Der Kuppelabschnitt 11 ' ist wie der Kuppelabschnitt 11 der ersetzten Stufe 2 ausgebildet. Das Abgangszahnrad 8' entspricht dem Abgangszahnrad 8 der ersetzten Stufe 2.

Wie aus den Figuren 2-4 erkennbar ist, gleichen die Kupplungskörper 25, 25', 25" den entsprechenden Trägerkörpern 4₁, 3₁, 2₁. Die Kupplungskörper 25, 25', 25" weisen keine Planetenräder auf und lassen eine einfache Änderung des Übersetzungsverhältnisses zu.

## Patentansprüche

1. Antriebsvorrichtung für Rollläden, Jalousien, Markisen, Tore, Türen und dergleichen mit einem in einem Wickelrohr angeordneten, dieses Wickelrohr antreibenden Elektromotor, dessen Drehzahl mittels eines mindestens einstufigen Planetengetriebes (1) vermindert wird, wobei das Planetengetriebe mindestens einen Kronenkörper (2₂, 3₂, 4₂) mit einer Innenverzahnung (12, 13) aufweist, wobei jede Stufe (2, 3, 4) des Planetengetriebes einen Planetenrad-Trägerkörper (2₁, 3₁, 4₁) mit am Umfang verteilten und in der Nähe des Umfangs drehbar gelagerten, die Innenverzahnung (12, 13) kämmenden Planetenrädern (5, 6, 7) und einem zentralen Abgangsabschnitt (8, 9, 10) umfasst, **dadurch gekennzeichnet, dass**
- der mindestens eine Kronenkörper (2₂, 3₂, 4₂) zur Beherbergung von insgesamt mindestens zwei Planetenrad-Trägerkörpern (2₁, 3₁, 4₁) vorgesehen ist, und
- der Trägerkörper (2₁, 3₁, 4₁) mindestens einer Getriebestufe (2, 3, 4) durch wenigstens einen Kupplungskörper (25, 25', 25") ersetzbar ist.

2. Antriebsvorrichtung nach Anspruch 1,
**dadurch gekennzeichnet,**
**dass** das Planetengetriebe (1) mindestens einen Kronenkörper (2₂, 3₂, 4₂) umfasst, der zur Beherbergung von mindestens zwei Planetenrad-Trägerkörpern (2₁, 3₁, 4₁) vorgesehen ist.

3. Antriebsvorrichtung nach Anspruch 1 oder 2,
**dadurch gekennzeichnet,**
**dass** das Planetengetriebe (1) mindestens einen Kronenkörper (2₂, 3₂, 4₂) umfasst, der zur Beherbergung eines Planetenrad-Trägerkörpers (2₁, 3₁, 4₁) vorgesehen ist.

4. Antriebsvorrichtung nach Anspruch 1, 2 oder 3,
**dadurch gekennzeichnet,**
**dass** der mindestens eine Kupplungskörper (25, 25', 25") in seinen Abmessungen dem ersetzbaren bzw. ersetzten Planetenrad-Trägerkörper (2₁, 3₁, 4₁) angepasst ist.

5. Antriebsvorrichtung nach einem der vorhergehenden Ansprüche,
**dadurch gekennzeichnet,**
**dass** zumindest ein zentraler Abgangsabschnitt (10) eines Planetenrad-Trägerkörpers (2₁, 3₁, 4₁) als Abgangszahnrad (8, 9) mit Planetenräder (5, 6, 7) der nächsten Stufe (2, 3, 4) kämmender Außenverzahnung ausgeführt ist.

6. Antriebsvorrichtung nach einem der vorhergehenden Ansprüche,
**dadurch gekennzeichnet,**
**dass** der mindestens eine Kupplungskörper (25, 25', 25"):
- eine zentrale, mit dem Abgangszahnrad (8, 9) der vorhergehenden Stufe kämmende Innenverzahnung (26, 26') und/oder
- einen mit einem Elektromotor kuppelbaren Kuppelabschnitt (11') und/oder
- ein dem Abgangszahnrad (8, 9) der ersetzten Stufe gleichendes Abgangszahnrad (8', 9') und/oder
- einen dem Abgangsabschnitt (10) der ersetzten Stufe gleichenden Abgangsabschnitt (10')
aufweist.

7. Antriebsvorrichtung nach einem der vorhergehenden Ansprüche,
**dadurch gekennzeichnet,**
**dass** der Kupplungskörper (25, 25', 25") dem ersetzten Trägerkörper bis auf eine Innenverzahnung (26, 26') gleicht.
